Europäisches Patentamt

European Patent Office

Office européen des brevets

(11) Veröffentlichungsnummer: **0 194 593 B1**

(12) **EUROPÄISCHE PATENTSCHRIFT**

(45) Veröffentlichungstag der Patentschrift: 06.03.91

(51) Int. Cl.⁵: **B60T 11/20**

(21) Anmeldenummer: **86103000.5**

(22) Anmeldetag: **06.03.86**

(54) **Hauptbremszylinder mit Füllstufe.**

(30) Priorität: **12.03.85 DE 3508798**

(43) Veröffentlichungstag der Anmeldung:
**17.09.86 Patentblatt 86/38**

(45) Bekanntmachung des Hinweises auf die
Patenterteilung:
**06.03.91 Patentblatt 91/10**

(84) Benannte Vertragsstaaten:
**DE FR GB IT**

(56) Entgegenhaltungen:
**EP-A- 0 110 740**
**DE-B- 2 460 529**
**US-A- 4 086 770**

(73) Patentinhaber: **LUCAS INDUSTRIES public limited company**
**Great King Street**
**Birmingham, B19 2XF West Midlands(GB)**

(72) Erfinder: **Friedsam, Ludwig**
**Winterhell 3**
**W-5471 Oberdürenbach(DE)**

(74) Vertreter: **Wuesthoff, Franz, Dr.-Ing. et al**
**Wuesthoff & Wuesthoff Patent- und Rechtsanwälte Schweigerstrasse 2**
**W-8000 München 90(DE)**

# Beschreibung

Die Erfindung betrifft eine hydraulische Bremsanlage mit den Merkmalen des Oberbegriffs des Patentanspruches 1.

Solche Bremsanlagen mit einer sogenannten Füllstufe sind bekannt, vgl. US-A-4 086 770. Mit einer Füllstufe wird erreicht, daß bei einer Bremsbetätigung in der Anfangsphase des Pedalweges die Bremsanlage schnell mit Hydraulik-Flüssigkeit aufgefüllt wird. Sobald ein bestimmter Druck in der Hydraulik-Flüssigkeit erreicht ist, schaltet die Füllstufe ab, d.h. wird unwirksam. Bei weiterem Durchdrücken des Bremspedals wird in der Bremsanlage kaum noch Hydraulik-Flüssigkeit bewegt, sondern der Pedaldruck in bekannter Weise hydraulisch in Bremsdruck umgesetzt.

Ist ein Hauptbremszylinder ohne zusätzliche Maßnahmen gemäß der US-A 4 086 770 mit einer Füllstufe versehen, so spürt der Fahrer beim Drükken der Bremse das Abschalten der Füllstufe bei Erreichen des Abschaltdruckes, da sich der Widerstand des Bremspedals sprunghaft ändert. Diese ruckartige Änderung des Widerstandes des Bremspedals kann den Fahrer verunsichern oder auch als unangenehm empfunden werden.

Bekanntlich können die Hauptbremszylinder hydraulischer Bremsanlagen mit sogenannten Bremskraftverstärkern versehen werden. Ein Bremskraftverstärker unterstützt die Wirkung des Bremspedals und weist in der Regel zwei Kammern mit einer beweglichen Trennwand auf, wobei mittels des Motors zwischen den Kammern eine Druckdifferenz erzeugt wird, wodurch die bewegliche Trennwand die Wirkung des Bremspedals unterstützend auf die Kolben des Hauptbremszylinders drückt.

Wird ein mit einer Füllstufe versehener Hauptbremszylinder auch mit einem Bremskraftverstärker ausgerüstet, so kann die eingangs erwähnte sprunghafte Änderung des Pedalwiderstandes vermieden werden, da die Füllstufe direkt vom Bremskraftverstärker beaufschlagt werden kann und nicht vom Bremspedal, so daß auch der Abschaltvorgang der Füllstufe im Bremspedal kaum spürbar ist.

Der Abschaltdruck der Füllstufe soll zweckmäßigerweise relativ hoch sein, damit beispielsweise ein 9" und 8" Tandemverstärker durch einen 9" Einfachverstärker ersetzt werden kann. Der Abschaltdruck würde in diesem Falle bei etwa 30-40 bar liegen.

Wird aber ein Hauptbremszylinder mit Füllstufe und Bremskraftverstärker versehen, so entstehen bei einem Ausfall des Bremskraftverstärkers erhebliche Probleme, da der Fahrer dann auch die Betätigungskraft für die Füllstufe bis zu dem relativ hohen Abschaltdruck direkt über das Pedal aufbringen muß.

Aus der DE-B-24 60 529 ist ein Tandem-Hauptzylinder für eine hydraulische Bremsanlage bekannt, dessen Primärkolben durch ein Abtriebsglied eines pedalbetätigten Bremskraftverstärkers mit beweglicher Wand verstellbar ist, über dem sich ein Fluiddruckunterschied erzeugen läßt mit einer Einrichtung, die bei Ausfall des Betriebsdruckes des Bremskraftverstärkers den Pedalbetätigungsaufwand selbsttätig verringert und hierzu ein in die Offenstellung vorgespanntes, durch den Betriebsdruck des Brems kraftverstärkers in die Schließstellung gedrängtes Ventil aufweist, das die Verbindung zwischen einem Fluidbehälter und einem Druckraum steuert, wobei die Einrichtung einen Hilfskolben aufweist, der einen größeren Durchmesser als der Primärkolben hat und zwischen dem Abtriebsglied des Bremskraftverstärkers und dem Primärkolben des Hauptzylinders in dem vom Betriebsdruck des Bremskraftverstärkers gesteuerten Druckraum angeordnet ist. Dieser Tandem-Hauptbremszylinder erfordert jedoch relativ lange Abmessungen, da das gesamte benötigte Bremsflüssigkeitsvolumen vom Primär- und Sekundärdruckraum zur Verfügung gestellt werden muß, weshalb der Hub der Primär- und Sekundärkolben entsprechend groß ist. Auch besitzt der Tandem-Hauptzylinder gemäß der DE-B-24 60 529 keine Füllstufe sondern lediglich eine Einrichtung, die das hydraulische Übersetzungsverhältnis des Hauptbremszylinders ändert, sobald die Bremskraftverstärkung ausfällt.

In der mit der vorliegenden Anmeldung prioritätsgleichen EP-A-0 197 307 wird eine hydraulische Bremsanlage vorgeschlagen mit einem Hauptbremszylinder und einer aus einem Füllkolben und einer Füllkammer bestehenden Füllstufe, die in der Anfangsphase einer Bremspedalbetätigung die Bremsanlage bei relativ kurzem Pedalweg mit Hydraulikflüssigkeit auffüllt, bis ein Abschaltdruck erreicht ist, bei dem ein erstes Ventil öffnet und damit die Füllstufe mit einem Reservoir für Hydraulikflüssigkeit verbindet und dadurch unwirksam macht, wobei ein durch eine Druckdifferenz beaufschlagbarer Bremskraftverstärker vorgesehen ist, und ein zweites Ventil funktionsmäßig parallel zum ersten Ventil zwischen Füllstufe und Reservoir angeordnet ist und bei funktionierendem Bremskraftverstärker schließt und bei nicht funktionierendem Bremskraftverstärker öffnet.

Der Erfindung liegt die Aufgabe zugrunde, einen Hauptbremszylinder für eine hydraulische Bremsanlage mit Füllstufe und Bremskraftverstärker zu schaffen, welcher auch bei Ausfall des Bremskraftverstärkers keine störenden Unregelmäßigkeiten bei der Bremspedalbetätigung aufweist.

Diese Aufgabe wird erfindungsgemäß mit den Merkmalen des Anspruches 1 gelöst.

Die Erfindung ermöglicht also, daß der Abschaltdruck für die Füllstufe bei funktionierendem Bremskraftverstärker, also bei Vorliegen der erforderlichen Druckdifferenz, relativ hoch ist, während bei Ausfall des Bremskraftverstärkers, also einem Verschwinden der erforderlichen Druckdifferenz, der Abschaltdruck relativ niedrig ist. Somit hat im letzteren Fall der Fahrer bei Ausfall des Bremskraftverstärkers nicht den hohen Abschaltdruck der Füllstufe über das Bremspedal aufzubringen. Ohne die erfindungsgemäß vorgesehene Abhängigkeit des Abschaltdruckes von der Druckdifferenz des Bremskraftverstärkers würde der Fahrer bei dessen Ausfall plötzlich einen erheblich veränderten Widerstand des Bremspedales vorfinden, was ihn verwirren oder verunsichern könnte.

Bevorzugte Ausgestaltungen der Erfindung sind in den abhängigen Ansprüchen angegeben. Durch die stufenlose Anpassung des Abschaltdruckes an die den Bremskraftverstärker beaufschlagende Druckdifferenz ist gewährleistet, daß der Fahrer bei einer Bremsanlage mit Füllstufe die möglichen Veränderungen am Bremskraftverstärker nicht wahrnimmt. Die Kraft/Druck-Kennlinie bleibt bei jedem Unter- bzw. Überdruck des Bremskraftverstärkers praktisch unverändert, so daß der Fahrer nicht durch Unregelmäßigkeiten verwirrt wird. Zwar ändern sich mit unterschiedlichen Druckdifferenzen des Bremskraftverstärkers die Pedalwege geringfügig, doch wird dies vom Fahrer kaum erkannt, jedenfalls wird er hierdurch nicht irritiert.

Die Abhängigkeit des Abschaltdruckes der Füllstufe und die gleichzeitige Gewährleistung eines Mindest-Abschaltdruckes wird in einer bevorzugten Ausgestaltung des Erfindungsgedankens dadurch erreicht, daß das Schließglied eines die Füllkammer der Füllstufe mit dem Hydraulik-Flüssigkeitsreservoir verbindenden Ventils durch eine Feder in die Schließstellung gespannt ist, wobei neben der Feder noch ein ebenfalls das Schließglied des Ventil beaufschlagender Kolben vorgesehen ist, welcher seinerseits durch die Druckdifferenz des Bremskraftverstärkers bewegt wird. Bei Ausfall der Druckdifferenz des Bremskraftverstärkers erzeugt somit der Kolben keine das Ventil schließende Kraft, so daß die Feder alleine den Mindest-Abschaltdruck definiert.

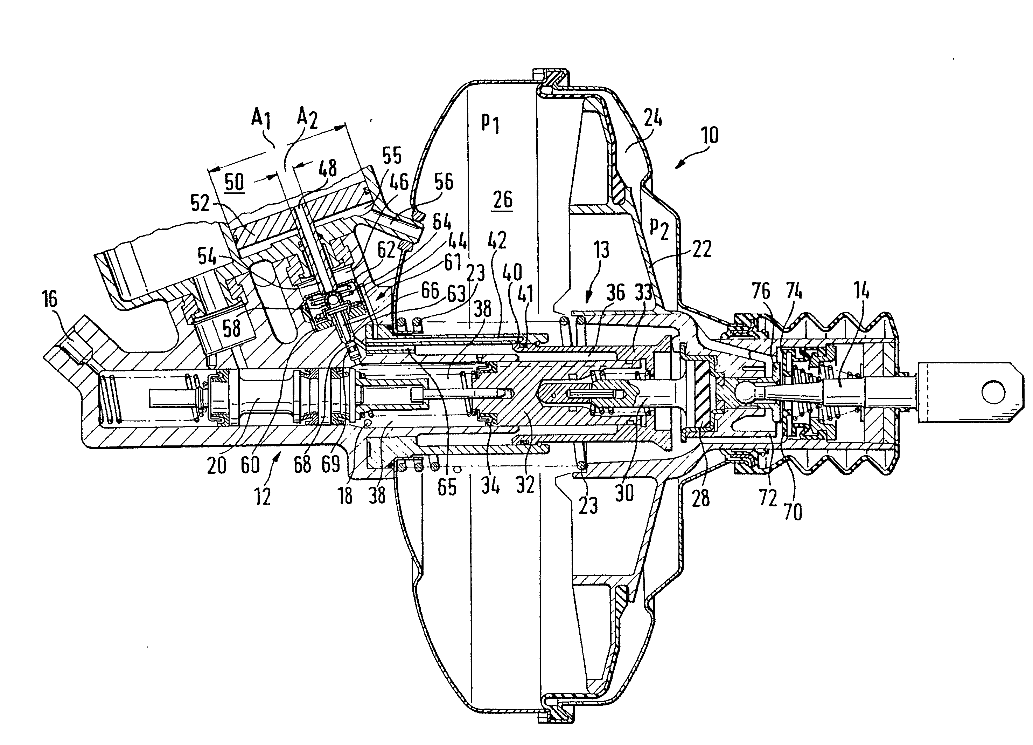

Nachfolgend ist die Erfindung anhand eines in der Zeichnung dargestellten Ausführungsbeispieles näher erläutert. Die einzige Figur zeigt schematisch einen Schnitt durch einen Hauptbremszylinder mit Füllstufe und Bremskraftverstärker.

An einem Bremskraftverstärker 10, welcher als bekannt vorausgesetzt werden kann, ist ein Hauptbremszylinder 12 angeschraubt. Die Füllstufe ist insgesamt mit dem Bezugszeichen 13 angedeutet.

Die vom Fahrer auf das Bremspedal (nicht gezeigt) aufgebrachte Bremskraft wird in üblicher Weise über die Pedal-Stange 14 eingeleitet. Die Anschlüsse für einen ersten und einen zweiten Bremskreis sind durch die Bezugzeichen 16 bzw. 18 angedeutet. Ein Zwischenkolben 20 trennt die beiden Bremskreise.

Der Bremskraftverstärker 10 weist zwei Kammern auf, die durch eine Wand 22 getrennt sind, nämlich eine Überdruckkammer 24 und eine Unterdruckkammer 26. Eine Feder 23 drückt die Wand 22 in der Figur nach rechts.

Die über die Pedal-Stange 14 eingeleitete Kraft wird über die elastische Reaktionsscheibe 28 auf den Ausgangsstößel 30 und einen Hochdruckkolben 32 übertragen. Der Hochdruckkolben 32 ist von einem Füllkolben 33 umgeben, welcher die Füllkammer 36 einschließt. Eine Manschette 34 ist zwischen der Füllkammer 36 und der Hochdruckkammer 38 angeordnet. Sie läßt Hydraulik-Flüssigkeit aus der Füllkammer 36 in die Hochdruckkammer 38 passieren. Eine Ausgleichsbohrung 40 verbindet über eine Längsbohrung 42, eine Querbohrung 44, eine Kammer 46 und eine Passage 48 die Füllkammer 36 mit einem Hydraulik-Flüssigkeitsreservoir 50.

Das Hydraulik-Flüssigkeitsreservoir 50 ist als Zylinder ausgestaltet, in dem sich ein Kolben 52 bewegen kann. Ein Kanal 56 verbindet die Unterdruckkammer 26 des Bremskraftverstärkers 10 mit einer Kammer 55, welche nicht mit Hydraulik-Flüssigkeit gefüllt ist und den Kolben 52 auf der vom Hydraulik-Flüssigkeitsreservoir 50 abgekehrten Seite beaufschlagt. Somit wirkt auf den Kolben 52 einerseits der Atmosphärendruck des Hydraulik-Flüssigkeitsreservoirs 50 und andererseits der Unterdruck $p_1$ der Unterdruckkammer 26. Sofern also in der Unterdruckkammer 26 des Bremskraftverstärkers 10 ein Unterdruck erzeugt wird, erfährt der Kolben 52 in der Figur eine nach unten gerichtete Kraft, welche durch die Differenz der Flächen $A_1$ und $A_2$ sowie die Druckdifferenz aus dem atmosphärischen Druck und dem Unterdruck $p_1$ definiert ist. Diese Kraft überträgt der Kolben 52 mittels eines Stößels 54 auf ein Blechteil 58, welches seinerseits wiederum auf ein Ventilschließglied 60 einwirkt.

Das insgesamt mit dem Bezugszeichen 61 versehene Ventil weist weiterhin ein geklipstes Blechteil 62 auf, an dem sich eine Feder 64 abstützt, welche auf das Blechteil 58 einwirkt, welches seinerseits das Ventilschließglied 60 beaufschlagt. Ein Kanal 63 verbindet über eine Kanalabzweigung 65 das Ventil 61 mit der Füllkammer 36. Weiterhin verbindet der Kanal 63 auch das Ventil 61 mit der Hochdruckkammer 38. In dieser Verbindung ist ein Steuerkolben 68 mit einer Dichtung 69 abdichtend angeordnet.

Nachfolgend ist die Funktion des Hauptbremszylinders erläutert. Bei einer Betätigung des (nicht gezeigten) Bremspedals wird die Pedal-Stange 14 nach links verschoben. Dadurch legt sich das ringförmig elastische Ventilelement 70 auf den zugehörigen Ventilsitz 72 und trennt die Verbindung zwischen den Kammern 24 und 26 des Bremskraftverstärkers 10. Bei weiterer Bewegung trennt sich das ringförmige Ventilelement 74, welches einstückig mit dem Ventilelement 70 ausgebildet ist, von dem zugehörigen Ventilsitz 76 und Luft unter Atmosphärendruck ($p_2$) kann in die Überdruckkammer 24 einströmen.

Der Druckunterschied zwischen der Überdruckkammer 24 und der Unterdruckkammer 26, in welcher in bekannter Weise ein Vakuum erzeugt wird, bewirkt eine Bewegung der die Kammern trennenden Wand 22 in der Figur nach links. Dabei wird von der Wand 22 der Füllkolben 33 der Füllstufe 13 verschoben und Druck aufgebaut, nachdem die Ausgleichsbohrung 40 von der Dichtung 41 überfahren ist. Dieser Druck wird durch Umklappen der Manschette 34 in die Hochdruckkammer 38 übertragen. Die von der beweglichen Wand 22 auf den Füllkolben 33 übertragene Kraft wird vom Fahrer nicht wahrgenommen, da keine Rückwirkung auf das Bremspedal erfolgt.

Durch die bewegliche Wand 22 wird auch der Ausgangsstößel 30, welcher den Hochdruckkolben 32 antreibt, in der Figur nach links bewegt. Wird ein Druck erreicht, der multipliziert mit der Abdichtfläche des Ventilschließgliedes 60 eine Kraft ergibt, die größer ist als die Kraft der Feder 64 zuzüglich der durch die Druckdifferenz zwischen Atmosphärendruck ($p_2$) und dem Unterdruck ($p_1$) bewirkten Kraft auf den Kolben 52, so hebt das Blechteil 58 vom Ventilschließglied 60 ab und der Druck in der Füllkammer 36 kann nicht weiter erhöht werden.

Bei einer weiteren Drucksteigerung in der Hochdruckkammer 38 drückt der zuvor druckausgeglichene Steuerkolben 68 über den Stößel 66 das Blechteil 58 vom Ventilschließglied 60 weg. Dadurch kann sich der Druck in der Füllkammer 36 vollständig abbauen und es ist keine Verlustarbeit mehr erforderlich, um den Füllkolben 33 zu bewegen, so daß die weiter aufgebrachte Pedalkraft ausschließlich zur Druckerzeugung in der Hochdruckkammer dient.

**Ansprüche**

1. Hydraulische Bremsanlage mit einem Hauptbremszylinder (12), mit einer einen Füllkolben (33) und eine Füllkammer (36) aufweisenden Füllstufe (15), die in einer Anfangsphase einer Bremspedalbetätigung die Bremsanlage bei relativ kurzem Pedalweg mit Hydraulikflüssigkeit auffüllt, und mit einem zwischen der Füllkammer (36) und einem Reservoir (50) für die Hydraulikflüssigkeit angeordneten Ventil (61), wobei ein Mindestabschaltdruck für die Füllstufe (15) derart erzeugt ist, daß das Schließglied (60) des Ventils (61) mittels einer Feder vorgespannt ist, wobei die Vorspannung des Schließgliedes der durch den Mindestabschaltdruck erzeugten Kraft entspricht, dadurch **gekennzeichnet,** daß ein druckdifferenzbetätigter Bremskraftverstärker (10) vorgesehen ist und daß zur Steuerung des Abschaltdruckes auf das Schließglied (60) des Ventils (61) eine von der im Bremskraftverstärker (10) herrschenden Druckdifferenz ($p_2-p_1$) abhängige Kraft einwirkt.

2. Hydraulische Bremsanlage nach Anspruch 1, dadurch **gekennzeichnet,** daß die Füllstufe (15) bei Fehlen einer Druckdifferenz im Bremskraftverstärker (10) unwirksam wird.

3. Hydraulische Bremsanlage nach Anspruch 2, dadurch **gekennzeichnet,** daß die Feder (64) des Ventils (61) und ein durch die Druckdifferenz ($p_2-p_1$) des Bremskraftverstärkers (10) bewegbarer Kolben (52) das Ventilschließglied (60) in seine Schließstellung drücken.

4. Hydraulische Bremsanlage nach Anspruch 3, dadurch **gekennzeichnet,** daß das Reservoir (50) für Hydraulikflüssigkeit als Zylinder ausgeformt ist, in dem der Kolben (52) geführt ist.

5. Hydraulische Bremsanlage nach Anspruch 4, dadurch **gekennzeichnet,** daß bei der der Bremskraftverstärker (10) zwei Kammern (24, 26) aufweist, von denen in der einen (26) ein Unterdruck erzeugbar ist, daß der Kolben (52) mit seiner dem Ventil (61) zugekehrten Seite vom Unterdruck der Unterdruckkammer (26) und auf seiner dem Ventil (61) abgekehrten Seite vom Atmosphärendruck beaufschlagt ist.

6. Hydraulische Bremsanlage nach einem der Ansprüche 3 bis 5, dadurch **gekennzeichnet,** daß die Spannkraft der Feder (64) der durch den Mindest-Abschaltdruck erzeugten, in Öffnungsrichtung auf das Ventilschließglied (60) wirkenden Kraft entspricht.

7. Hydraulische Bremsanlage nach einem der Ansprüche 2 bis 6, dadurch **gekennzeichnet,** daß zwischen dem Ventil (61) und der Hochdruckkammer (38) des Hauptbremszylinders (12) ein Kanal (63) vorgesehen ist, in dem ein Steuerkolben (68) abdichtend angeordnet ist, der das ventilschließglied (60) in Richtung auf seine Öffnungsstellung beaufschlagt.

8. Hydraulische Bremsanlage nach einem der vorhergehenden Ansprüche, dadurch **gekennzeichnet,** daß der Füllkolben (33) bei Beginn einer Bremsbetätigung eine Ausgleichsbohrung (40) zwischen der Füllkammer (36) und dem Reservoir (50) schließt.

9. Hydraulische Bremsanlage nach einem der vorhergehenden Ansprüche, dadurch **gekennzeichnet,** daß der Füllkolben (33) vom beweglichen Glied (22) des Bremskraftverstärkers (10) direkt beaufschlagt ist.

## Claims

1. An hydraulic brake system comprising a master cylinder (12) which comprises a fast-fill stage (15) including a filling piston (33) and a filling chamber (36) to fill the brake system with hydraulic fluid at a relativley short pedal displacement in an initial phase of brake pedal actuation, and further comprising a valve (61) disposed between the filling chamber (36) and a reservoir (50) for the hydraulic fluid, a minimum cut-off pressure of the fast-fill stage being generated such as to bias the closure member (60) of the valve (61) by means of a spring, said bias of the closure member corresponding to the force generated by the minimum cut-off pressure, **characterized** in that a brake pressure booster (10) actuated by differential pressure is provided, and in that a force dependent upon the pressure difference (p2-p1) prevailing in the brake pressure booster (10) acts on the closure member (60) of the valve (61) for control of the cut-off pressure.

2. The hydraulic brake system as claimed in claim 1, characterized in that the fast-fill stage (15) becomes ineffective when there is no pressure difference in the brake pressure booster (10).

3. The hydraulic brake system as claimed in claim 2, characterized in that the spring (64) of the valve (61) and a piston (52) which is movable by the pressure difference (p2-p1) of the brake pressure booster (10) press the valve closure member (60) into closing position.

4. The hydraulic brake system as claimed in claim 3, characterized in that the reservoir (50) for hydraulic fluid is shaped like a cylinder in which the piston (52) is guided.

5. The hydraulic brake system as claimed in claim 4, characterized in that the brake pressure booster (10) comprises two chambers (24,26) in one of which low pressure can be generated, and that the piston (52) is pressurized by the low pressure in the low pressure chamber (26) at its side facing the valve (61) and by atmospheric pressure at its side remote from the valve (61).

6. The hydraulic brake system as claimed in one of claims 3 to 5, characterized in that the tension of the spring (64) corresponds to the force generated by the minimum cut-off pressure and acting in opening sense on the valve closure member (60).

7. The hydraulic brake system as claimed in one of claims 2 to 6, characterized in that a passage (63) is provided between the valve (61) and the high pressure chamber (38) of the master cylinder (12) in which passage a control piston (68) is sealingly arranged so as to pressurize the valve closure member (60) in the direction of its opening position.

8. The hydraulic brake system as claimed in any one of the preceding claims, characterized in that the filling piston (33) closes a compensation bore (40) between the filling chamber (36) and the reservoir (50) at the start of brake actuation.

9. The hydraulic brake system as claimed in any one of the preceding claims, characterized in that the filling piston (33) is pressurized directly by the movable member (22) of the brake pressure booster (10).

## Revendications

1. Installation de freinage hydraulique comprenant un maître-cylindre de frein (12) avec un étage de remplissage (15) possédant un piston de remplissage (33) et une chambre de remplissage (36), qui remplit l'installation de freinage de liquide hydraulique dans une phase initiale d'un actionnement de la pédale de frein, sur une course de pédale relativement courte, ainsi qu'une soupape (61) disposée entre la chambre de remplissage (36) et un réservoir (50) pour le liquide hydraulique, avec établissement d'une pression d'arrêt minimale pour l'étage de remplissage (15) par la précontrainte de l'obturateur (60) de la soupape (61) au moyen d'un ressort, précontrainte qui correspond à la force générée par la pression d'arrêt minimale, caractérisée en ce qu'elle comprend un servofrein (10) actionné par une différence de pression et que, en vue du réglage de la pression d'arrêt, l'obturateur (60) de la soupape (61) est exposé à une force dépendant de la différence de pression (p2-p1) régnant dans le servofrein (10).

2. Installation de freinage hydraulique selon la revendication 1, caractérisée en ce que l'étage de remplissage (15) devient inopérant en l'absence d'une différence de pression dans le servofrein (10).

3. Installation de freinage hydraulique selon la revendication 2, caractérisée en ce que le ressort (64) de la soupape (61) et un piston (52) déplaçable par la différence de pression (p2-p1) du servofrein (10), poussent l'obturateur (60) de la soupape à sa position de fermeture.

4. Installation de freinage hydraulique selon la revendication 3, caractérisée en ce que le réservoir (50) pour le liquide hydraulique est réalisé sous la forme d'un cylindre dans lequel est guidé le piston (52).

5. Installation de freinage hydraulique selon la revendication 4, caractérisée en ce que le servofrein (10) comporte deux chambres (24, 26) dans l'une (26) desquelles peut être établie une dépression, et que le piston (52) est exposé à la dépression régnant dans la chambre à dépression (26) par son côté dirigé vers la soupape (61) et à la pression atmosphérique par son côté éloigné de la soupape (61).

6. Installation de freinage hydraulique selon une des revendications 3 à 5, caractérisée en ce que la force du ressort (64) correspond à la force produite par la pression d'arrêt minimale, agissant sur l'obturateur (60) dans le sens de l'ouverture de la soupape.

7. Installation de freinage hydraulique selon une des revendications 2 à 6, caractérisée en ce qu'elle comprend, entre la soupape (61) et la chambre haute pression (38) du maître-cylindre (12), un canal (63) dans lequel est disposé à joint étanche un piston pilote (68) qui agit sur l'obturateur de soupape (60) pour l'amener à sa position d'ouverture.

8. Installation de freinage hydraulique selon une des revendications précédentes, caractérisée en ce que le piston de remplissage (33) ferme un orifice d'égalisation (40) entre la chambre de remplissage (36) et le réservoir (50) au début d'un actionnement du frein.

9. Installation de freinage hydraulique selon une des revendications précédentes, caractérisée en ce que le piston de remplissage (33) est chargé directement par l'organe mobile (22) du servofrein (10).